# EUROPÄISCHE PATENTSCHRIFT

(11) **EP 1 789 204 B1**
(45) Veröffentlichungstag und Bekanntmachung des Hinweises auf die Patenterteilung: **25.11.2009**
(21) Anmeldenummer: 05785733.6
(22) Anmeldetag: 10.09.2005
(51) Int. Cl.: B05D 1/02, B05D 7/00, B05B 3/10, B05B 3/08

(54) **VERFAHREN ZUR HERSTELLUNG VON VERBUNDELEMENTEN AUF DER BASIS VON SCHAUMSTOFFEN AUF ISOCYANATBASIS**
METHOD FOR THE PRODUCTION OF COMPOSITE ELEMENTS BASED ON ISOCYANATE-BASED FOAMS
PROCEDE POUR PRODUIRE DES ELEMENTS COMPOSITES COMPRENANT DES MOUSSES PLASTIQUES A BASE D'ISOCYANATES

(30) Priorität: 13.09.2004 DE 102004044595
(43) Veröffentlichungstag der Anmeldung: 30.05.2007
(73) Patentinhaber: BASF SE, 67056 Ludwigshafen (DE)
(72) Erfinder: CALGUA, Erwin, 67480 Edenkoben (DE); SCHAPER, Bernd, 49356 Diepholz (DE); SCHÖN, Lars, 48529 Nordhorn (DE); MALOTKI, Peter, 49448 Lemförde (DE); LEHMANN, Pit, 49074 Osnabrück (DE); THATER, Michael, 49424 Goldenstedt (DE)
(86) Internationale Anmeldenummer: PCT/EP2005/009760
(87) Internationale Veröffentlichungsnummer: WO 2006/029786

(56) Entgegenhaltungen:
- EP-A- 0 036 508
- US-A- 3 147 137
- US-A- 4 803 746
- US-A- 5 296 303
- US-A- 5 693 423

## Beschreibung

Die Erfindung betrifft ein Verfahren zur Herstellung von Verbundelementen aus mindestens einer Deckschicht und einem Schaumstoff auf Isocyanatbasis unter Verwendung eines Haftvermittlers.

Die Herstellung von Verbundelementen aus insbesondere metallischen Deckschichten und einem Kern aus Schaumstoffen auf Isocyanatbasis, zumeist Polyurethan-(PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt. Insbesondere bei den Fassadenelementen spielt die Haftung zwischen Schaum und der Deckschicht eine entscheidende Rolle. Bei dunklem Farbton kann sich die isolierte äußere Deckschicht leicht auf Temperaturen um 80°C aufheizen. Bei einer unzureichenden Haftung des Schaums an der Deckschicht entstehen auf der Oberfläche Ausbeulungen die durch Schaumablösungen vom Blech hervorgerufen werden und die Fassade unansehnlich machen. Zur Beseitigung dieser Probleme werden schon bei der Coil-Herstellung Haftvermittlerlacke aufgetragen. Aus verfahrenstechnischen Gründen sind jedoch in den Haftvermittlerlacken Zusatzstoffe wie Fließhilfsmittel, Hydrophobiermittel, Entlüfter und Ähnliches enthalten. Diese Zusatzstoffe stören den Polyurethanschäumprozess zum Teil erheblich. Hinzu kommen Wechselwirkungen im Stahlcoil zwischen Außen- und Rückseitenlack. Die so zusätzlich auf die Rückseite übertragenen Substanzen haben meistens ebenfalls einen negativen Einfluss auf den PUR-Schäumprozess und führen zu Störungen im Sandwichelement. Auch die inzwischen zum Stand der Technik gehörende Corona-Behandlung der Deckschichten reicht in vielen Fällen nicht aus, um diese Störungen zu beseitigen. Des weiteren kann es aus den verschiedensten Gründen vorkommen, dass die Temperatur des Doppelbandes nicht optimal auf das jeweilige System eingestellt ist. Dies gilt insbesondere bei Anfahrvorgängen in der Produktion. Dieses kann ebenfalls einen negativen Einfluss auf den Schäumprozess und die Haftung des Schaums zu den metallischen Deckschichten haben.

Weiterhin kommt es bei der Herstellung der Sandwichelemente durch die verschiederrsten Gründe oftmals zu unerwünschten Lufteinschlüssen zwischen Blech und Polyurethanhartschaum, sogenannten Lunkern, an der unteren und oberen Deckschicht. Diese Lufteinschlüsse zwischen Blech und Schaumstoff können besonders bei starken Temperaturwechsein in der Anwendung als Fassadenelement zu Ausbeulungen des Bleches führen. Dieses macht dann eine Fassade ebenfalls unansehnlich.

Demzufolge ist es erforderlich ein Verfahren zu finden, welches die Haftfestigkeit der PUR- und PIR-Schäume zu metallischen Deckschichten nachhaltig verbessert und auch bei widrigen äußeren Umständen des Produktionsverfahren aufrecht erhält. Das Verfahren kann kontinuierlich oder diskontinuierlich eingesetzt werden. Eine diskontinuierliche Arbeitsweise kann zum Beispiel bei Anfahrvorgängen des Doppelbandes und bei mittels diskontinuierlich arbeitenden Pressen hergestellten Verbundelementen in Frage kommen. Eine kontinuierliche Anwendung ist erforderlich, wenn PUR- oder PIR-Systeme eingesetzt werden die von Natur aus eine sehr geringe Haftfestigkeit zu metallischen Deckschichten aufweisen.

Weiterhin sollte bei diesem Verfahren gleichzeitig die Ausbildung von Lunkern, insbesondere an der unteren Deckschicht, minimiert werden.

Ein möglicher Weg zur Verbesserung der Haftung ist der Auftrag eines Haftvermittlers auf die Deckschichten. Oftmals ist es so, dass bei Sandwichelementen die untere Deckschicht die schlechteste Haftung, bestimmt beim Zugversuch, aufweist. Weiterhin ist bei den üblichen mittels Sandwichelementen erstellten Konstruktionen die Blechunterseite die Außenseite der Fassade, sodass sie extremen Bedingungen wie Temperatur und Sogwirkungen ausgesetzt ist und deswegen stärker belastet wird als die Oberseite des Sandwichelementes. Aus diesen Gründen kann man sich darauf beschränken, den Haftvermittler auf die untere Deckschicht aufzutragen. Nach dem Auftrag des Haftvermittlers auf die untere Deckschicht erfolgt der Auftrag des PUR- bzw. PIR-Systems auf die Deckschicht, sodass ein Verbundelement mit der Struktur Deckschicht-Haftvermittler-PUR- bzw. PIR-Hartschaum-Deckschicht entsteht.

Zum Auftrag von Lacken, Haftvermittlern, Klebern und dünnen Filmen im allgemeinen auf Bleche bzw. andere Substrate gibt es eine Vielzahl von etablierten Verfahren. Lacke können mittels Tauchen, Sprühen, elektrostatischer Abscheidung, Plasmabeschichtung, Fluten oder Walzen auf Substrate aufgetragen werden. Weiterhin besteht die Möglichkeit, mittels Spin-Coating dünne Filme auf einem Substrat zu erzeugen. Dabei wird die Substanz auf das Substrat aufgebracht und das Substrat anschließend in Rotation versetzt, wodurch die Substanz gleichmäßig über das Substrat verteilt wird. Derartige Verfahren sind jedoch bei den Blechen für die Herstellung von Sandwichelementen nicht praktikabel.

Ein dem Spin-Coating sehr ähnliches Verfahren benutzt ebenfalls eine rotierende Vorrichtung. Allerdings wird hier die Substanz durch die Rotation der Scheibe lateral weggeschleudert. Mit dieser Technik lassen sich besonders gut Rohre oder andere Hohlräume von innen beschichten, wie beispielsweise in US 3349568, DE 2808903 und WO 9959730 beschrieben. Eine Weiterentwicklung dieser Technik dient zur Beschichtung von Formteilen und auch Blechen. Allerdings werden bei all diesen Verfahren die zu beschichtenden Deckschichten um die rotierende Scheibe herum geführt und die Substanz wird von der Scheibe immer in lateraler Richtung auf die betreffende Deckschicht aufgeschleudert, wie beispielsweise in DE 2412686 beschrieben. Zum besseren Auftrag wird dabei zum Teil zusätzlich noch ein elektrostatisches Feld angelegt. Bei all diesen Verfahren können jedoch in hohem Maße Aerosole gebildet werden, welche umweit- und gesundheitsschädlich sind.

Aufgabe der vorliegenden Erfindung war es nun, ein geeignetes Auftragsverfahren für einen Haftvermittler auf ein horizontales Blech oder eine andere Deckschicht zu finden, die in horizontaler Richtung kontinuierlich transportiert wird, da die Herstellung von Sandwichelementen in der Regel mit einem kontinuierlich arbeitenden Doppelband erfolgt. Dabei sollte es zu keiner Bildung oder Freisetzung von Aerosolen kommen. Weiterhin sollte das Verfahren zum Aufbringen des Haftvermittlers weitgehend wartungsfrei sein.

Die Aufgabe konnte überraschenderweise gelöst werden indem der Haftvermittler über eine in der Waagerechten, vorzugsweise parallel zur Deckschicht, befindlichen rotierenden Scheibe auf die Deckschicht aufgebracht wird.

Gegenstand der Erfindung ist somit ein Verfahren zur Herstellung von Verbundelementen aus mindestens einer Deckschicht a) und einem Hartschaumstoff auf Isocyanatbasis b), wobei zwischen der Deckschicht a) und dem Hartschaumstoff auf Isocyanatbasis b) ein Haftvermittler c) aufgebracht ist, die Deckschicht a) kontinuierlich bewegt wird und der Haftvermittler c) und das Ausgangsmaterial für den Hartschaumstoff auf Isocyanatbasis b) nacheinander auf die Deckschicht aufgebracht werden, **dadurch gekennzeichnet, dass** der Auftrag des Haftvermittlers c) mittels einer rotierenden Scheibe erfolgt, die in der Waagerechten oder in einer geringen Abweichung von der Waagerechten von bis zu 15°, vorzugsweise parallel zu der Deckschicht angebracht ist.

Bei Einsatz der erfindungsgemäßen Vorrichtung zur Herstellung von Verbundelementen, enthaltend Schaumstoffe auf Isocyanatbasis, handelt es sich bei der Flüssigkeit vorzugsweise um einen Haftvermittler c).

Bevorzugt wird als Haftvermittler c) ein reaktives Ein- oder Mehrkomponenten Polyurethansystem eingesetzt.

Es hat sich als vorteilhaft erwiesen, wenn die offene Zeit des Haftvermittlers c) noch nicht überschritten, das heißt das Polyurethansystem noch nicht vollständig abreagiert hat, wenn das Ausgangsmaterial für den Hartschaumstoff auf Isocyanatbasis b) auf die untere Deckschicht aufgebracht wird. Dies kann durch die Entfernung der Auftragsvorrichtung für den Haftvermittler von der Vorrichtung für den Auftrag des Ausgangsmaterial für den Hartschaumstoff auf Isocyanatbasis b), oder vorzugsweise durch die Einstellung der Reaktivität des Haftvermittler gesteuert werden.

Als Deckschicht können Gipskartonplatten, Glasfliese, Aluminiumfolien, Aluminium-Kupfer- oder Stahlbleche, bevorzugt Aluminiumfolien, Aluminium- oder Stahlbleche, besonders bevorzugt Stahlbleche verwendet werden. Die Stahlbleche können beschichtet oder unbeschichtet sein. Vorzugsweise werden sie nicht corona-behandelt.

Die Deckschicht wird vorzugsweise mit einer konstanten Geschwindigkeit von 2 -15 m/min, bevorzugt 3 - 12 m/min, besonders bevorzugt 3 - 9 m/min transportiert. Dabei befindet sich die Deckschicht zumindest ab dem Auftrag des Polyurethansystems b), vorzugsweise während der gesamten Zeitdauer ab dem Aufbringen des Haftvermittlers in einer waagerechten Position. Der Haftvermittler kann auch aufgetragen werden wenn die Deckschicht in Transportrichtung leicht geneigt ist und somit nicht in der Waagerechten geführt wird.

Bei den üblichen Sandwich-Elementen wird der Hartschaumstoff auf Isocyanatbasis von einer unteren und einer oberen Deckschicht umschlossen. Es genügt, wenn die untere Deckschicht mit einem Haftvermittler versehen wird.

Beim erfindungsgemäßen Verfahren werden dabei bei der Verwendung von Blechen und Folien als Deckschichten nacheinander die Deckschichten von einer Rolle abgecoilt, profiliert, erwärmt, gegebenenfalls coronabehandelt, um die Beschäumbarkeit mit Polyurethan zu erhöhen, mit dem Ausgangsmaterial für den Hartschaumstoff auf Isocyanatbasis b), häufig auch als PUR- bzw. PIR-System bezeichnet, beschäumt, im Doppelband ausgehärtet und letztlich auf die gewünschte Länge zugeschnitten.

Der Auftrag des Haftvermittlers c) kann dabei prinzipiell an jeder Stelle des Prozesses zwischen Abcoilen der Deckschichten und Auftrag des PUR- bzw. PIR-Systems erfolgen.

Günstig ist dabei, wenn die Entfernung zwischen Auftrag des Haftvermittlers c) und Auftrag des PUR- bzw. PIR-Systems b) gering ist. Dadurch ist der Abfall, welcher durch dieses Verfahren zu Beginn und Ende sowie bei unvorhergesehenen Unterbrechungen des Produktionsprozesses entsteht, minimal.

Der Austrag des Haftvermittlers erfolgt über eine Scheibe, welche in der Waagerechten, vorzugsweise parallel über der unteren Deckschicht montiert ist und über einen Antrieb in Rotation versetzt werden kann. Die Scheibe kann auch mit einer Abweichung von bis zu 15° von der Waagerechten angebracht werden. Die Scheibe kann rund oder elliptisch sein. Vorzugsweise weist die Scheibe ein Längen-Breiten-Verhältnis von 1 bis 1,8 besonders bevorzugt von 1 bis 1,4 und insbesondere von 1,0 bis 1,25 auf.

Die Scheibe kann vollkommen flach oder an der Seite nach oben abgerundet oder abgekantet sein. Bevorzugt wird eine an den Seiten nach oben abgerundete oder abgekantete Scheibe eingesetzt. In die Abkantung werden Löcher eingebracht, um den Austrag des Haftvermittlers c) zu gewährleisten. Durchmesser und Anzahl der Löcher werden so aufeinander abgestimmt, dass ein möglichst gleichmäßiger feinverteilter Auftrag des Haftvermittlers c) auf die unterliegende Deckschicht möglich ist, sämtliches auf die Scheibe aufgebrachtes Material ausgetragen werden kann, und der Wartungsaufwand der Scheibe minimal ist. Vorzugsweise weist die äußere Abkantung 4 - 64 Löcher mit einem Durchmesser von 0,5 - 3 mm, bevorzugt 12 - 40 Löcher mit einem Durchmesser von 1 - 3 mm, besonders bevorzugt 15 - 30 Löcher mit einem Durchmesser von 1,5 - 2,5 mm auf.

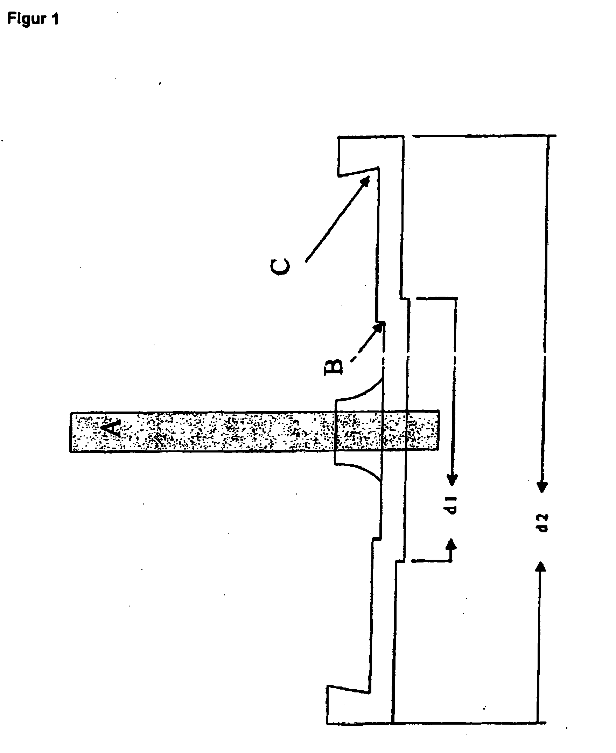

In einer Ausführungsform ist die Scheibe kaskadenartig gestaltet. Figur 1 zeigt die Seitenansicht einer solchen Scheibe. Dabei sind die Kaskaden von der Rotationsachse (A) nach außen hin ansteigend angeordnet. An den Übergängen von einer Kaskade zur benachbarten (B) können Löcher in der Scheibe angebracht sein, so dass ein Teil des Haftvermittlers an diesen Kaskadenübergängen auf die untere Deckschicht ausgetragen werden kann. Solch eine kaskadenartig gestaltete Scheibe sorgt für einen besonders gleichmäßigen Auftrag des Haftvermittlers auf die darunter befindliche Deckschicht. Der Auftrag des Haftvermittlers auf die Scheibe erfolgt möglichst nah an der Rotationsachse. Überraschend wurde dabei gefunden, dass der Haftvermittler besonders gleichmäß9g auf die untere Deckschicht verteilt wird, wenn der Auftragspunkt des Haftvermittlers parallel zur Produktionsrichtung exakt vor bzw. hinter der Rotationsachse liegt.

Die Scheibe weist, abhängig von der Breite der Deckschicht, einen Durchmesser zwischen 0,05 bis 0,3 m, bevorzugt 0,1 bis 0,25 m, besonders bevorzugt 0,12 bis 0,22 m bezogen auf die lange Seite, auf. Sie ist in einer Höhe von 0,02 - 0,2 m, bevorzugt 0,03 - 0,18 m, besonders bevorzugt 0,03 - 0,15 m über der zu benetzenden Deckschicht angebracht.

Es kann eine Scheibe mit 2 - 4, bevorzugt 2 - 3, besonders bevorzugt 2 Kaskaden eingesetzt werden.

Der Neigungswinkel der Löcher, welche zum Austrag des Haftvermittlers in die Scheibe eingebracht werden, beträgt in bezug auf die untere Deckschicht etwa 10 - 70°, bevorzugt 30 - 60°. Die Löcher können an den Kaskadenübergängen sowie an der äußeren Abkantung angebracht sein. Die Anzahl der Löcher nimmt dabei von Kaskade zu Kaskade von innen nach außen zu. Am in bezug auf die Rotationsachse innersten Kaskadenübergang (B) sind dabei 10 - 30, bevorzugt 12 - 25, besonders bevorzugt 12 - 20 Löcher mit einem Durchmesser von 1,5 - 2,5 mm angebracht. An der äußersten Abkantung (C) beträgt die Anzahl der Löcher 12 - 40, bevorzugt 12 - 30, besonders bevorzugt 15 - 30 mit einem Durchmesser von 1,5 - 2,5 mm. In einer besonders bevorzugten Ausführungsform der Scheibe werden die Löcher an der äußeren Abkantung alternierend mit unterschiedlichen Neigungen zur Deckschicht gestaltet. Das Verhältnis der Durchmesser benachbarter Kaskaden dₙ/dₙ₋₁ beträgt 1,2 - 3, bevorzugt 2 - 2,6.

Der Benetzungsradius des Haftvermittlers auf der unteren Deckschicht liegt vorzugsweise zwischen 0,25 - 1 m, bevorzugt 0,35 - 0,75 m.

Die Drehzahl der Scheibe liegt vorzugsweise zwischen 200 - 2500 min⁻¹, besonders bevorzugt zwischen 200 - 2000 min⁻¹, und insbesondere zwischen 300 - 1500 min⁻¹.

Die Menge des auf die Deckschicht aufgetragenen Haftvermittlers c) liegt zwischen 30 - 300 g/m², bevorzugt 40 - 200 g/m², besonders bevorzugt 50 - 120 g/m².

Der Haftvermittler c) wird vor dem Aufbringen auf die rotierende Scheibe maschinell vermischt, wobei Hoch- oder Niederdruckmischer, vorzugsweise Niederdruckmischer, verwendet werden können, und über eine geeignete Austragsvorrichtung, beispielsweise ein nachgeschaltetes Rührorgan, auf die Scheibe aufgetragen. Wird die Scheibe nun mittels eines Antriebs in Rotation versetzt, erfolgt eine flächige Verteilung des Haftvermittlers c) auf die unter der Scheibe befindliche, kontinuierlich beförderte Deckschicht. Zum Vermischen und Auftrag des Haftvermittlers auf die Scheibe kann beispielsweise ein Rührorgan aus Kunststoff verwendet werden. Die Austragsmenge des Haftvermittlers c) wird so auf die Geschwindigkeit des kontinuierlich arbeitenden Doppelbandes abgestimmt, dass die gewünschte Auftragsmenge pro m² Blech realisiert werden kann.

Die Höhe der Scheibe über der unteren Deckschicht, der Scheibendurchmesser sowie die Rotationsgeschwindigkeit sind so aufeinander abgestimmt, dass der ausgetragene Haftvermittler c) das unterliegende kontinuierlich transportierte Blech bis zu den Rändern möglichst gleichmäßig benetzt.

Im Gegensatz zum Stand der Technik wird der Haftvermittler c) zwar lateral weggeschleudert, aber aufgrund der niedrigen Rotationsgeschwindigkeit sowie mit Hilfe der Schwerkraft auf die sich in der Waagerechten, vorzugsweise parallel und unterhalb zur rotierenden Scheibe befindliche Deckschicht verteilt. Überraschend wurde nun gefunden, dass der Auftrag mittels oben beschriebener Technik aerosolfrei erfolgen kann.

Als Aerosole werden dabei kolloidale Systeme aus Gasen, wie Luft, mit darin fein verteilten kleinen flüssigen Teilchen von etwa 10⁻⁷ bis 10⁻³ cm Durchmesser bezeichnet.

Bei den aus ökonomischer Sicht notwendigen geringen Auftragsmengen ist keine vollständige Benetzung der unteren Deckschicht mit dem Haftvermittler c) erreichbar. Überraschenderweise wurde nun aber gefunden, das die mittels der erfindungsgemäßen Auftragstechnik bei geringen Auftragsmengen erreichte Beschichtung der unteren Deckschicht ausreichend ist, um eine deutliche Verbesserung der Zugfestigkeit zwischen der behandelten Deckschicht und dem darüber befindlichen Schaum im Vergleich zu unbehandelten Blechen zu erreichen.

Weiterhin kann mit dem erfindungsgemäßen Verfahren der Lunkeranteil auf der unteren Deckschicht deutlich reduziert werden.

Nach erfolgtem Auftrag des Haftvermittlers c) auf die untere Deckschicht erfolgt der Auftrag des Ausgangsmaterials für den Hartschaumstoff auf Isocyanatbasis b). Die Reaktivität des Haftvermittlers c) ist dabei so eingestellt , dass die Systeme b) und c) miteinander zur Reaktion kommen (die offene Zeit des Haftvermittlers c) zum Zeitpunkt des Auftrages von b) also noch nicht überschritten ist), und nach einer definierten Zeit aushärten.

Durch den Einsatz des Haftvermittlers c) kann die Doppelbandtemperatur, welche im Normalfall für die Verarbeitung von PIR-Systemen 60°C erreichen muss, auf 55°C abgesenkt werden.

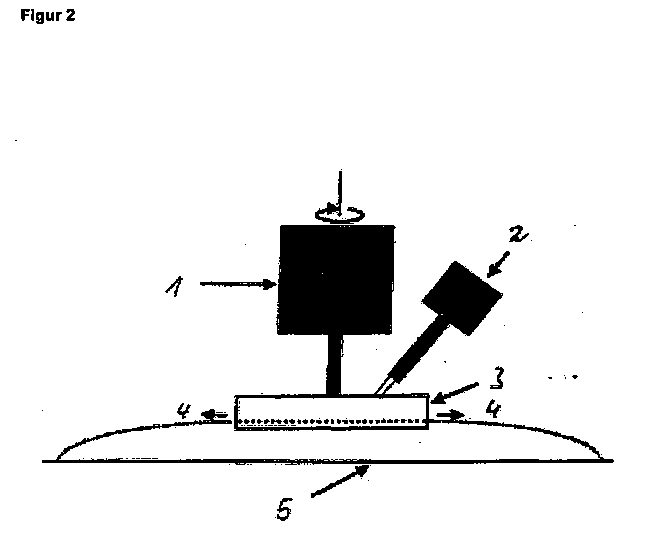

Figur 2 zeigt die erfindungsgemäße Vorrichtung in der Seitenansicht. Auf die waagerecht oder vorzugsweise parallel zur Deckschicht (5) angebrachten Scheibe (3), die über den Antrieb (1) in rotierende Bewegung versetzt wird, wird über die Dosiereinrichtung (2) der Haftvermittler gegeben. Durch die Rotation wird er von der Scheibe (3) geschleudert (4) und gelangt mittels Schwerkraft auf die Deckschicht (5).

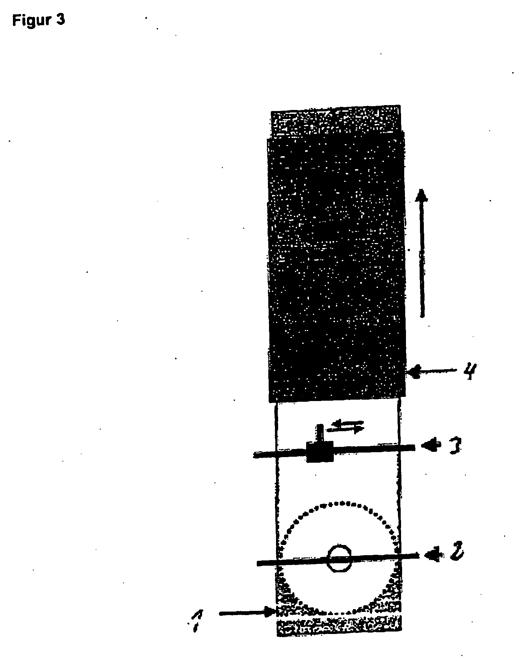

Figur 3 zeigt eine Vorrichtung zur Herstellung von Sandwichelementen unter Verwendung der erfindungsgemäßen Vorrichtung in der Draufsicht. Auf die untere Deckschicht (1) wird über die rotierende Scheibe (2) der Haftvermittler c) und danach über das Schäumportal (3) das Ausgangsmaterial für die Hartschaumstoffe auf Isocyanatbasis b) aufgebracht.

Als Haftvermittler können die aus dem Stand der Technik bekannten Haftvermittler auf Polyurethanbasis eingesetzt werden. Diese sind im allgemeinen erhältlich durch Umsetzung von Polyisocyanaten mit Verbindungen mit zwei gegenüber Isocyanaten reaktiven Wasserstoffatomen, wobei das Umsetzungsverhältnis vorzugsweise so gewählt wird, dass im Reaktionsgemisch das Verhältnis von Anzahl an Isocyanatgruppen zu Anzahl an gegenüber Isocyanaten reaktiven Gruppen 0,8 bis 1,8 : 1, bevorzugt 1 bis 1,6 : 1 beträgt.

Als Polyisocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI).

Bevorzugt werden dabei die Isocyanate der BASF AG Lupranat^{®} M 50, Lupranat^{®} M 70 und Lupranat^{®} M 200 eingesetzt. In einer besonderen Ausführungsform sind die Isocyanate, welche zur Herstellung des Hartschaumstoffes auf Isocyanatbasis b) sowie des Haftvermittlers c) verwendet werden, identisch. In einer bevorzugten Ausführungsform wird Lupranat^{®} M 70 verwendet, in einer besonders bevorzugten Ausführungsform erfolgt der Einsatz von Lupranat^{®} M 200.

Als Verbindungen mit mindestens zwei gegenüber Isocyanat reaktiven Wasserstoffatomen kommen im allgemeinen solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen.

Vorzugsweise eingesetzt werden Polyetherole und/oder Polyesterole, besonders bevorzugt Polyetherpolyole. Die Hydroxylzahl der verwendeten Polyetherole und/oder Polyesterole beträgt vorzugsweise 25 bis 800 mg KOH/g, die Molekulargewichte sind im allgemeinen größer als 400. Die Polyurethane können ohne oder mit Kettenverlängerungs- und/oder Vemetzungsmitteln hergestellt werden. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Die Polyolkomponente des Haftvermittlers c) weist dabei vorzugsweise eine Viskosität von 100 - 1000 mPas, bevorzugt 100 - 800 mPas, besonders bevorzugt 150 - 400 mPas (25°C) auf.

Im Haftvermittler können gegebenenfalls additive oder reaktive Flammschutzmittel enthalten sein. Derartige Flammschutzmittel werden im allgemeinen in einer Menge von 0,1 bis 30 Gew.-%, bezogen auf das Gesamtgewicht der Polyolkomponente, eingesetzt.

Der Umsetzung der Polyisocyanaten mit den Polyolen werden bevorzugt keine physikalischen Treibmittel zugegeben. Die verwendeten Polyole können jedoch noch Restwasser enthalten, welches als Treibmittel wirkt. Die resultierenden Polyurethanhaftvermittler weisen dadurch eine Dichte von 200 bis 1200 g/l, bevorzugt von 400 bis 1000 g/l, besonders bevorzugt von 450 bis 900 g/l auf.

Die für das erfindungsgemäße Verfahren eingesetzten Hartschaumstoffe auf Isocyanatbasis b) werden auf übliche und bekannte Weise durch Umsetzung von Polyisocyanaten mit Verbindungen mit mindestens zwei mit Isocyanatgruppen reaktiven Wasserstoffatomen in Anwesenheit von Treibmitteln, Katalysatoren und üblichen Hilfs- und/oder Zusatzstoffen hergestellt. Zu den eingesetzten Ausgangsstoffen ist im einzelnen folgendes zu sagen.

Als organische Polyisocyanate kommen vorzugsweise aromatische mehrwertige Isocyanate in Betracht.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylendiisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPas.

Als Verbindungen mit mindestens zwei gegenüber Isocyanatgruppen reaktiven Wasserstoffatomen b) kommen insbesondere Polyetheralkohole und/oder Polyesteralkohole mit OH-Zahlen im Bereich von 25 bis 800 mgKOH/g zum Einsatz.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesterole haben zumeist eine Funktionalität von 1,5 - 4.

Insbesondere kommen Polyetherpolyole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startsubstanzen kommen insbesondere Verbindungen mit mindestens 3, vorzugsweise 4 bis 8 Hydroxylgruppen oder mit mindestens zwei primären Aminogruppen im Molekül zum Einsatz.

Als Startsubstanzen mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 25 mgKOH/g bis 800 mgKOH/g und insbesondere 240 mg KOH/g bis 570 mg KOH/g.

Zu den Verbindungen mit mindestens zwei gegenüber Isocyanat reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vemetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Hartschaumstoffe wird üblicherweise in Anwesenheit von Treibmitteln, Katalysatoren, Flammschutzmitteln und Zellstabilisatoren sowie, falls erforderlich weiteren Hilfs- und/oder Zusatzstoffe durchgeführt.

Als Treibmittel kann Wasser verwendet werden, das mit Isocyanatgruppen unter Abspaltung von Kohlendioxid reagiert. In Kombination mit oder vorzugsweise an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Beispielhaft seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Die Polyurethan- oder Polyisocyanuratschaumstoffe enthalten üblicherweise Flammschutzmittel. Vorzugsweise werden bromfreie Flammschutzmittel eingesetzt. Besonders bevorzugt sind Phosphoratome enthaltende Flammschutzmittel, insbesondere werden Trischlorisopropylphosphat, Diethylethanphosphonat, Triethylphosphat und/oder Diphenylkresylphosphat eingesetzt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind stark basische Amine, wie z. B. sekundäre aliphatische Amine, Imidazole, Amidine, sowie Alkanolamine, und/oder metallorganische Verbindungen, insbesondere solche auf Basis von Zinn.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschäumen kann auch mit einem Index von > 180, vorzugsweise 200 - 500, besonders bevorzugt 250 - 500, gearbeitet werden.

Die Vermischung der Ausgangskomponenten kann mit Hilfe bekannter Mischvorrichtungen erfolgen.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen den Treibmitteln, den Katalysatoren sowie den weiteren Hilfs- und/oder Zusatzstoffen zu einer sogenannten Polyolkomponente vermischt und diese mit den Polyisocyanate oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen vermischt werden.

Die Dichte der hierfür eingesetzten Hartschaumstoffe beträgt vorzugsweise 10 bis 400 kg/m³, vorzugsweise 20-200, insbesondere 30 bis 100 kg/m³.

Die Dicke der Verbundelemente liegt üblicherweise im Bereich zwischen 5 bis 250 mm.

### Beispiele

### A) Zusammensetzung des Haftvermittlersystems

### A-Komponente

| | |
|---|---|
| 62 Teile | Polyetherol 1 bestehend aus Propylenglycol und Propylenoxid, Funktionali- tät 2, Hydroxylzahl 250 mg KOH/g |
| 25 Teile | Polyesterol 1 bestehend aus Phthalsäureanhydrid, Diethylenglycol und Ölsäure, Funktionalität 1,8, Hydroxylzahl 200 mg KOH/g |
| 10 Teile | Flammschutzmittel Trischlorisoproylphosphat, TCPP |
| 2 Teile | siliconhaltiger Stabilisator |
| 1 Teil | aminhaltiger PUR-Katalysator |

### B-Komponente

| | |
|---|---|
| Isocyanat | Lupranat M50 , polymeres MDI (BASF AG) |

A- und B-Komponente wurden in solchen Verhältnissen miteinander vermischt das die Kennzahl im Bereich von 115 lag. Es wurde kein zusätzliches Treibmittel zugegeben. Die verwendeten Polyole enthielten jedoch Restwasser, sodass die Dichte des ausgehärteten Haftvermittlers im Bereich von etwa 560 g/L lag.

### B) Zusammensetzung des PUR-Systems II

### A-Komponente

| | |
|---|---|
| 55,5 Teile | Polyetherol 1 bestehend aus Sorbitol und Propylenoxid, Funktionalität 5, Hydroxylzahl 500 mg KOH/g |
| 20 Teile | Flammschutzmittel 1 Trischlorisopropylphosphat, TCPP |
| 20 Teile | Flammschutzmittel 2 PHT-4-Diol (Great Lakes) |
| 1,5 Teile | siliconhaltiger Stabilisator |
| 3 Teile | Katalysator 1 aminhaltiger PUR-Katalysator |

| | |
|---|---|
| Treibmittel 1 | n-Pentan |
| Treibmittel 2 | Wasser |

### B-Komponente

| | |
|---|---|
| Isocyanat | Lupranat M50, polymeres MDI (BASF AG) |

A-, B-Komponente und Treibmittel wurden in solchen Verhältnissen zur Reaktion gebracht das die Kennzahl im Bereich 130 lag und eine Rohdichte von 43 g/L erreicht wurde.

### C) Zusammensetzung des PIR-Systems

### A-Komponente

| | |
|---|---|
| 56 Teile | Polyesterol 1 bestehend aus Phthalsäureanhydrid, Diethylenglycol und Ölsäure, Funktionalität 1,8, Hydroxylzahl 200 mg KOH/g |
| 10 Teile | Polyetherol 1 bestehend aus Ethylenglycol und Ethylenoxid, Funktiona-lität 2, Hydroxylzahl 200 mgKOH/g |
| 30 Teile | Flammschutzmittel 1 Trischlorisopropylphosphat, TCPP |
| 1,5 Teile | Stabilisator 1 siliconhaltiger Stabilisator |
| 1,5 Teile | Katalysator 1 PIR-Katalysator, Salz einer Carbonsäure |
| 1 Teil | Katalysator 2 aminhaltiger PUR-Katalysator |

| | |
|---|---|
| Treibmittel 1 | n-Pentan |
| Treibmittel 2 | Wasser |

### B-Komponente

| | |
|---|---|
| Isocyanat | Lupranat M50, polymeres MDI (BASF AG) |

A-, B-Komponente und Treibmittel wurden in solchen Verhältnissen miteinander vermischt, dass die Kennzahl im Bereich 350 lag und eine Rohdichte von 43 g/L erreicht wurde.

Das Haftvermittlersystem wurde bei leicht erhöhter Temperatur von 30-50°C mittels einer Niederdruckmischmaschine (Unipre) vermischt und mittels eines Rührorgans aus Kunststoff auf die Scheibe aufgetragen. Die Scheibe wies einen Durchmesser von 15 cm auf und war an der Seite nach oben abgekantet. Die Höhe der Abkantung betrug 15 mm. Am äußeren Durchmesser waren 32 Löcher angebracht, durch die das Haftvermittlersystem mittels Fliehkraft weggeschleudert wurde. Die Rotationsgeschwindigkeit betrug 900 min⁻¹. Das Doppelband hatte eine Breite von 1,2 m und wurde mit einer konstanten Geschwindigkeit von 3 m/min vorangetrieben. Die ausgetragenen Mengen an Haftvermittler wurden so variiert, das Auftragsmengen von 60, 80 und 100 g/m² realisiert wurden. Die Temperatur des Doppelbandes wurde im Bereich von 55 - 60°C variiert.

Der Auftrag des Haftvermittlersystems c) erfolgte etwa 2 m vor dem Schäumportal. Das Polyisocyanurat-System b) wurde mittels einer oszillierenden Gießharke aufgetragen. Die metallische Deckschicht wurde nicht coronabehandelt. Nach Aushärtung des Systems wurden Prüfkörper der Abmessung 100x100x5 mm gesägt und die Haftung des Schaums zur Deckschicht nach DIN EN ISO 527-1 / DIN 53292 bestimmt. Die Lunkeranzahl wurde optisch bestimmt.

**Tabelle 1.**

| Vers.-Nr | Aufgetragene Menge System I | Temperatur Doppelband | Haftung [N/mm²] | Aerosol-bildung | Auftragsbild | Lunker-anzahl |
|---|---|---|---|---|---|---|
| 1 | 60 g/m² | 60°C | 0,6 | nein | sehr gleichmäßig | gering |
| 2 | 80 g/m² | 60°C | 0,7 | nein | sehr gleichmäßig | gering |
| 3 | 100 g/m² | 60°C | 0,8 | nein | gleichmäßig | gering |
| 4 | 100 g/m² | 55°C | 0,5 | nein | gleichmäßig | gering |
| 5 | - | 55°C | 0,12 | - | - | mittel |
| 6 | - | 60°C | 0,15 | - | - | mittel |

Versuchsparameter und Ergebnisse. Beispiel 5 und 6 sind die Vergleichsbeispiele für die Herstellung von Sandwichelementen ohne den Einsatz von Haftvermittler.

Es wurde die Ausführungsform der Scheibe variiert, um eine möglichst gleichmäßige Verteilung des Haftvermittlers auf der unteren Drehschicht zu erreichen.

**Tabelle 2**

| Scheibe Nr. | Geometrie | Abkantung | Anzahl der Löcher | Durchmesser [mm] | Rotations.-Geschw. [U/min] | Auftragsbild |
|---|---|---|---|---|---|---|
| 1 | rund | nein | - | 150 | 900 | gleichmäßig |
| 2 | rund | ja | 32 | 150 | 900 | gleichmäßig |
| 3 | rund | ja | 10 | 160 | 700 | ungleichmäßig |
| 4 | kaskadenartig (2 Kaskaden) | ja | innen 16; außen 20 | 65, 150 | 1200 | sehr gleichmäßig |
| 5 | kaskadenartig (2 Kaskaden) | ja | innen 12; außen 24 | 75, 260 | 800 | sehr gleichmäßig |

Verwendete Scheibengeometrien und beobachtete Auftragbilder des Haft-vermittler-Systems c) auf der zu beschichteten Deckschicht. Beurteilt wird dabei die Gleichmäßigkeit des Auftrags über die Oberfläche der Deckschicht. Bei ungleichmäßigem Auftrag erfolgt meist eine Anhäufung des Systems c) in den Randzonen der Deckschicht.

## Patentansprüche

1. Verfahren zur Herstellung von Verbundelementen aus mindestens einer Deckschicht a) und einem Hartschaumstoff auf Isocyanatbasis b), wobei zwischen der Deckschicht a) und dem Hartschaumstoff auf Isocyanatbasis b) ein Haftvermittler c) aufgebracht ist, wobei die Deckschicht a) kontinuierlich bewegt wird und der Haftvermittler c) und das Ausgangsmaterial für den Hartschaumstoff auf Isocyanatbasis b) nacheinander auf die Deckschicht aufgebracht werden, **dadurch gekennzeichnet, dass** der Auftrag des Haftvermittlers c) mittels einer rotierenden Scheibe erfolgt, die in der Waagerechten oder in einer Abweichung von der Waagerechten von bis zu 15°, vorzugsweise parallel zu der Deckschicht, **dadurch gekennzeichnet, dass** die vorgenannte scheibe in einer Höhe von 0,02 - 0,2 m über der zu benetzenden Deckschicht angebracht ist.

2. Verfahren nach Anspruch 1, **dadurch gekennzeichnet, dass** als Haftvermittler c) ein reaktives Ein- oder Mehrkomponenten Polyurethansystem eingesetzt wird.

3. Verfahren nach Anspruch 2, **dadurch gekennzeichnet, dass** der Haftvermittler c) seine offene Zeit zum Zeitpunkt des Auftrages des Ausgangsmaterial für den Hartschaumstoff auf Isocyanatbasis b) auf die untere Deckschicht noch nicht überschritten hat.

4. Verfahren nach Anspruch 2, **dadurch gekennzeichnet, dass** der Haftvermittler c) eine Rohdichte von 200 -1200 g/L, bevorzugt 400 -1000 g/L, besonders bevorzugt 450 - 900 g/L aufweist

5. Verfahren nach Anspruch 2, **dadurch gekennzeichnet, dass** der Haftvermittler c) kein physikalischen Treibmittel enthält.

6. Verfahren nach Anspruch 1, **dadurch gekennzeichnet, dass** die Hartschaumstoffe auf Isocyanatbasis b) Polyurethan- oder Polyisocyanurat-Schaumstoffe sind.

7. Verfahren nach Anspruch 1, **dadurch gekennzeichnet, dass** als Deckschicht Gipskartonplatten, Glasfliese, Aluminiumfolien, Aluminium- Kupfer- oder Stahlbleche, bevorzugt Aluminiumfolien, Aluminium- oder Stahlbleche verwendet werden.

8. Verfahren nach Anspruch 1, **dadurch gekennzeichnet, dass** als Deckschicht Stahlbleche verwendet werden die vorzugsweise nicht corona-behandelt werden.

9. Verfahren nach Anspruch 1 wobei die Temperatur des zur Herstellung der Verbundelemente verwendeten Doppelbandes kleiner 60°C beträgt.

10. Verfahren nach Anspruch 1, **dadurch gekennzeichnet, dass** die Menge des auf die Deckschicht aufgetragenen Haftvermittlers c) zwischen 30 - 300 g/m², bevorzugt 40 - 200 g/m², besonders bevorzugt 50 - 120 g/m² liegt.

11. Verfahren nach Anspruch 1, **dadurch gekennzeichnet, dass** die Benetzung der Deckschicht mit dem Haftvermittler c) unvollständig sein kann.

12. Verfahren nach Anspruch 1, **dadurch gekennzeichnet, dass** die Deckschicht mit einer konstanten Geschwindigkeit von 2 -15 m/min, bevorzugt 3 - 12 m/min, besonders bevorzugt 3 - 9 m/min transportiert wird.

13. Verfahren nach Anspruch 1, **dadurch gekennzeichnet, dass** die Scheibe kreisförmig ist.

14. Verfahren nach Anspruch 1, **dadurch gekennzeichnet, dass** die Scheibe elliptisch ist.

15. Verfahren nach Anspruch 1, **dadurch gekennzeichnet, dass** die Scheibe kaskadenartig gestaltet ist.

16. Verfahren nach Anspruch 1, **dadurch gekennzeichnet, dass** die Scheibe ein Längen/Breitenverhältnis von 1 bis 1,8, bevorzugt 1 bis 1,4, besonders bevorzugt 1,0 bis 1,25 aufweist.

17. Verfahren nach Anspruch 1, **dadurch gekennzeichnet, dass** der Durchmesser der Scheibe zwischen 0,05 bis 0,3 m, bevorzugt 0,1 bis 0,25 m, besonders bevorzugt 0,12 bis 0,22 m bezogen auf die lange Seite liegt.

18. Verfahren nach Anspruch 1, **dadurch gekennzeichnet, dass** die Scheibe vollkommen flach ist.

19. Verfahren nach Anspruch 1, **dadurch gekennzeichnet, dass** die Scheibe an der Seite nach oben abgerundet oder abgekantet ist.

20. Verfahren nach Anspruch 19, **dadurch gekennzeichnet, dass** im Bereich der äußeren Abrundung bzw. Abkantung 4 - 64 Löcher mit einem Durchmesser von 0,5-3 mm, bevorzugt 12 - 40 Löcher mit einem Durchmesser von 1-3 mm, besonders bevorzugt 15 - 30 Löcher mit einem Durchmesser von 1,5-2,5 mm angebracht sind.

21. Verfahren nach Anspruch 19, **dadurch gekennzeichnet, dass** die Scheibe kaskadenartig gestaltet ist und in jedem Kaskadenübergang 10 - 30, bevorzugt 12 - 25, besonders bevorzugt 12 - 20 Löcher mit einem Durchmesser von 1,5 - 2,5 mm angebracht sind.

22. Verfahren nach Anspruch 1, **dadurch gekennzeichnet, dass** die Scheibe in einer Höhe 0,03 - 0,18 m, bevorzugt 0,03 - 0,15 m über der zu benetzenden Deckschicht angebracht ist.

23. Verfahren nach Anspruch 1, **dadurch gekennzeichnet, dass** der Benetzungsradius des Haftvermittlers c) auf der Deckschicht a) zwischen 0,25 - 1 m, bevorzugt 0,35 - 0,75 m liegt.

24. Verfahren nach Anspruch 1, **dadurch gekennzeichnet, dass** die Drehzahl der Scheibe zwischen 200 - 2500 min⁻¹, bevorzugt 200 - 2000 min⁻¹, besonders bevorzugt 300 -1500 min⁻¹ liegt.

## Claims

1. A process for production of composite elements composed of at least one outer layer a) and of an rigid isocyanate-based foam b), where between the outer layer a) and the rigid isocyanate-based foam b) an adhesion promoter c) has been applied, and where the outer layer a) is continuously moved and the adhesion promoter c) and the starting material for the rigid isocyanate-based foam b) are applied successively to the outer layer, which comprises applying the adhesion promoter c) by means of a rotating plate which has been installed horizontally or with a deviation of up to 15° from horizontal, preferably parallel to the outer layer at a height of from 0.02 to 0.2 m above the outer layer to be wetted.

2. The process according to claim 1, wherein the adhesion promoter c) used comprises a reactive single- or multicomponent polyurethane system.

3. The process according to claim 2, wherein at the juncture of application of the starting material for the rigid isocyanate-based foam b) to the lower outer layer, the adhesion promoter c) has not yet exceeded its open time.

4. The process according to claim 2, wherein the envelope density of the adhesion promoter c) is from 200 to 1200 g/L, preferably from 400 to 1000 g/L, particularly preferably from 450 to 900 g/L.

5. The process according to claim 2, wherein the adhesion promoter c) does not comprise any physical blowing agent.

6. The process according to claim 1, wherein the rigid isocyanate-based foams b) are polyurethane foams or polyisocyanurate foams.

7. The process according to claim 1, wherein the outer layer used comprises gypsum plasterboard, glass nonwovens, aluminum foils, aluminum sheets, copper sheets, or steel sheets, preferably aluminum foils, aluminum sheets, or steel sheets.

8. The process according to claim 1, wherein the outer layer used comprises steel sheets which preferably are not corona-treated.

9. The process according to claim 1, where the temperature of the twin belt system used for production of the composite elements is below 60°C.

10. The process according to claim 1, wherein the amount of the adhesion promoter c) applied to the outer layer is from 30 to 300 g/m², preferably from 40 to 200 g/m², particularly preferably from 50 to 120 g/m².

11. The process according to claim 1, wherein the wetting of the outer layer with the adhesion promoter c) may be incomplete.

12. The process according to claim 1, wherein the outer layer is transported with a constant velocity of from 2 to 15 m/min, preferably from 3 to 12 m/min, particularly preferably from 3 to 9 m/min.

13. The process according to claim 1, wherein the rotating plate is circular.

14. The process according to claim 1, wherein the rotating plate is elliptical.

15. The process according to claim 1, wherein the design of the rotating plate is cascade-like.

16. The process according to claim 1, wherein the length/width ratio of the rotating plate is from 1 to 1.8, preferably from 1 to 1.4, particularly preferably from 1.0 to 1.25.

17. The process according to claim 1, wherein the diameter of the rotating plate is from 0.05 to 0.3 m, preferably from 0.1 to 0.25 m, particularly preferably from 0.12 to 0.22 m, based on the long side.

18. The process according to claim 1, wherein the rotating plate is completely flat.

19. The process according to claim 1, wherein the edge of the rotating plate has been angled-off or rounded-off upward.

20. The process according to claim 19, wherein, in the region of the outer rounding-off or angling-off, from 4 to 64 holes with a diameter of from 0.5 to 3 mm, preferably from 12 to 40 holes with a diameter of from 1 to 3 mm, particularly preferably from 15 to 30 holes with a diameter of from 1.5 to 2.5 mm, have been installed.

21. The process according to claim 19, wherein the design of the rotating plate is cascade-like and at each cascade transition from 10 to 30, preferably from 12 to 25, particularly preferably from 12 to 20, holes whose diameter is from 1.5 to 2.5 mm have been introduced.

22. The process according to claim 1, wherein the rotating plate has been installed at a height of from 0.03 to 0.18 m, preferably from 0.03 to 0.15 m, above the outer layer to be wetted.

23. The process according to claim 1, wherein the wetting radius of the adhesion promoter c) on the outer layer a) is from 0.25 to 1 m, preferably from 0.35 to 0.75 m.

24. The process according to claim 1, wherein the rotation rate of the rotating plate is from 200 to 2500 rpm, preferably from 200 to 2000 rpm, particularly preferably from 300 to 1500 rpm.

## Revendications

1. Procédé pour la préparation d'éléments composites comprenant au moins une couche de recouvrement a) et une mousse dure à base d'isocyanate b), où un promoteur d'adhérence c) est disposé entre la couche de recouvrement a) et la mousse dure à base d'isocyanate b), la couche de recouvrement a) étant déplacée en continu et le promoteur d'adhérence c) et le matériau de départ pour la mousse dure à base d'isocyanate b) étant appliqués successivement sur la couche de recouvrement, **caractérisé en ce que** l'application du promoteur d'adhérence c) est réalisée au moyen d'un disque en rotation qui est disposé dans une positon horizontale ou une position déviée de l'horizontale de jusqu'à 15°, de préférence parallèlement à la couche de recouvrement à une hauteur de 0,02-0,2 m au-dessus de la couche de recouvrement à mouiller.

2. Procédé selon la revendication 1, **caractérisé en ce qu'**on utilise comme promoteur d'adhérence (c) un système de polyuréthane réactif à un ou plusieurs composants.

3. Procédé selon la revendication 2, **caractérisé en ce que** le promoteur d'adhérence c) n'a pas encore dépassé son temps de mise en oeuvre au moment de l'application du matériau de départ pour la mousse dure à base d'isocyanate b) sur la couche de recouvrement inférieure.

4. Procédé selon la revendication 2, **caractérisé en ce que** le promoteur d'adhérence c) présente une densité brute de 200-1200 g/l, de préférence de 400-1000 g/l de manière particulièrement préférée de 450-900 g/l.

5. Procédé selon la revendication 2, **caractérisé en ce que** le promoteur d'adhérence c) ne contient pas d'agent de gonflement physique.

6. Procédé selon la revendication 1, **caractérisé en ce que** les mousses dures à base d'isocyanate b) sont des mousses de polyuréthane ou de polyisocyanurate.

7. Procédé selon la revendication 1, **caractérisé en ce qu'**on utilise comme couche de recouvrement des plaques de plâtre cartonnées, de carreaux en verre, des feuilles d'aluminium, des tôles en aluminium, en cuivre ou en acier, de préférence des feuilles d'aluminium, des tôles d'aluminium ou d'acier.

8. Procédé selon la revendication 1, **caractérisé en ce qu'**on utilise comme couche de recouvrement des tôles en acier qui ne sont de préférence pas traitées au corona.

9. Procédé selon la revendication 1, où la température de la double bande utilisée pour la réalisation des éléments composites est inférieure à 60°C.

10. Procédé selon la revendication 1, **caractérisé en ce que** la quantité de promoteur d'adhérence c) appliquée sur la couche de recouvrement est située entre 30-300 g/m², de préférence entre 40-200 g/m², de manière particulièrement préférée entre 50-120 g/m².

11. Procédé selon la revendication 1, **caractérisé en ce que** le mouillage de la couche de recouvrement par le promoteur d'adhérence c) peut être incomplet.

12. Procédé selon la revendication 1, **caractérisé en ce que** la couche de recouvrement est transportée avec une vitesse constante de 2-15 m/min, de préférence de 3-12 m/min, de manière particulièrement préférée de 3-9 m/min.

13. Procédé selon la revendication 1, **caractérisé en ce que** le disque est circulaire.

14. Procédé selon la revendication 1, **caractérisé en ce que** le disque est elliptique.

15. Procédé selon la revendication 1, **caractérisé en ce que** le disque est réalisé en cascade.

16. Procédé selon la revendication 1, **caractérisé en ce que** le disque présente un rapport longueur/largeur de 1 à 1,8, de préférence de 1 à 1,4, de manière particulièrement préférée de 1,0 à 1,25.

17. Procédé selon la revendication 1, **caractérisé en ce que** le diamètre du disque est situé entre 0,05 à 0,3 m, de préférence entre 0,1 à 0,25 m, de manière particulièrement préférée entre 0,12 à 0,22 m par rapport au long côté.

18. Procédé selon la revendication 1, **caractérisé en ce que** le disque est complètement plat.

19. Procédé selon la revendication 1, **caractérisé en ce que** le disque est arrondi ou plié vers le haut sur le côté.

20. Procédé selon la revendication 19, **caractérisé en ce que** dans la zone de l'arrondi ou du pli extérieur, on a réalisé 4-64 trous présentant un diamètre de 0,5-3 mm, de préférence 12-40 trous présentant un diamètre de 1-3 mm, de manière particulièrement préférée 15-30 trous présentant un diamètre de 1,5-2,5 mm.

21. Procédé selon la revendication 19, **caractérisé en ce que** le disque est réalisé en cascade et qu'on a disposé dans chaque transition de cascade 10-30, de préférence 12-25, de manière particulièrement préférée 12-20 trous présentant un diamètre de 1,5-2,5 mm.

22. Procédé selon la revendication 1, **caractérisé en ce que** le disque est disposé à une hauteur de 0,03-0,18 m, de préférence de 0,03-0,15 m au-dessus de la couche de recouvrement à mouiller.

23. Procédé selon la revendication 1, **caractérisé en ce que** le rayon de mouillage du promoteur d'adhérence c) sur la couche de recouvrement a) est situé entre 0,25-1 m, de préférence entre 0,35-0,75 m.

24. Procédé selon la revendication 1, **caractérisé en ce que** la vitesse de rotation du disque est située entre 200-2500 min⁻¹, de préférence entre 200-2000 min⁻¹, de manière particulièrement préférée entre 300-1500 min⁻¹.
